Europäisches Patentamt

European Patent Office

Office européen des brevets

(19)

(11) Numéro de publication : **0 274 309 B1**

(12)

# FASCICULE DE BREVET EUROPEEN

(45) Date de publication du fascicule du brevet :
**05.06.91 Bulletin 91/23**

(51) Int. Cl.$^5$ : **G21C 9/04, A62C 3/06**

(21) Numéro de dépôt : **87402766.7**

(22) Date de dépôt : **04.12.87**

(54) Réceptacle d'extinction par isolement d'un combustible liquide enflammé.

(30) Priorité : **08.12.86 FR 8617122**

(43) Date de publication de la demande :
**13.07.88 Bulletin 88/28**

(45) Mention de la délivrance du brevet :
**05.06.91 Bulletin 91/23**

(84) Etats contractants désignés :
**BE DE FR GB IT**

(56) Documents cités :
**FR-A- 2 073 477
GB-A- 2 005 459
NUCLEAR ENERGY, vol. 18, no. 5, octobre
1979, pages 343-347; R.N. NEWMAN et al.:
"Installations for the suppression of sodium
fires"**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Levillain, Claude
Le Petit Barthélémy Bt.A Impasse Maryse
Bastie
F-13090 Aix en Provence (FR)**

(74) Mandataire : **Mongrédien, André et al
c/o BREVATOME 25, rue de Ponthieu
F-75008 Paris (FR)**

EP 0 274 309 B1

Jouve, 18, rue Saint-Denis, 75001 PARIS

**Description**

L'invention concerne un réceptacle conçu pour éteindre par isolement un combustible liquide enflammé admis dans ce réceptacle.

L'invention s'applique à tous les secteurs industriels dans lesquels des volumes importants de combustible liquide sont utilisés ou produits. Cette situation se présente fréquemment dans l'industrie chimique et dans les usines de production et de traitement des hydrocarbures. Elle se rencontre également dans les réacteurs nucléaires à neutrons rapides dans lesquels un volume important de sodium liquide à haute température est utilisé comme fluide caloporteur dans le circuit primaire et dans le circuit secondaire du réacteur.

Dans toutes ces applications, les risques d'incendie constituent un problème important.

Une solution connue à ce problème, décrite dans le document FR-A-2 319 392, concerne un réceptacle comprenant un bac conçu pour recevoir le combustible liquide enflammé et pour éteindre rapidement ce combustible en l'isolant de l'air ambiant. Ce bac est obturé par un couvercle dans lequel sont formées des ouvertures d'admission du combustible liquide, ces ouvertures étant normalement obturées par des volets dont l'effacement est commandé par l'arrivée du combustible liquide sur le couvercle du bac.

Dans le document FR-A-2 357 267 on a décrit un perfectionnement à ce dispositif, permettant de recueillir un volume de combustible liquide enflammé supérieur au volume intérieur du bac. A cet effet, plusieurs bacs identiques aux précédents sont juxtaposés, solidarisés entre eux, et communiquent deux à deux par exemple par des tuyauteries ne comportant pas de système d'obturation, ou par des pièces de liaison présentant une section en U renversé.

Si le réceptacle décrit dans ce dernier document permet bien de recueillir une quantité plus importante de combustible liquide, il présente une moins grande efficacité qu'un dispositif constitué d'un bac unique et de volume limité. En effet, alors que le volume d'air présent au-dessus du combustible liquide enflammé admis dans le bac est très faible dans le cas d'un bac unique, ce volume est accru lorsque le bac communique par des passages ouverts avec d'autres bacs remplis d'air.

Par ailleurs, le dispositif d'extinction décrit dans le document FR-A-2 319 392 et dans le document FR-A-2 357 267 est d'une réalisation relativement complexe et coûteuse, cette réalisation étant telle que les bacs ne peuvent pas être désolidarisés aisément pour leur manutention et leur traitement ultérieur, comme cela est souhaitable notamment lorsque le réceptacle est utilisé pour éteindre un feu de sodium dans un réacteur nucléaire à neutrons rapides.

Enfin, la réalisation sous forme de plaques inclinées des couvercles obturant les bacs, ne permet pas la libre circulation du personnel d'exploitation ou d'intervention.

La présente invention a précisément pour objet un réceptacle d'extinction par isolement d'un combustible de liquide enflammé réalisé selon le même principe que le réceptacle décrit dans le document FR-A-2 357 267, tout en assurant l'extinction d'une manière aussi efficace que si chacun des bacs était unique.

L'invention a aussi pour objet un réceptacle d'extinction de réalisation particulièrement simple, cette réalisation étant telle que les bacs puissent être désolidarisés aisément lorsque certains au moins des bacs sont remplis de combustible liquide.

Enfin, l'invention a aussi pour objet un réceptacle d'extinction par isolement permettant la libre circulation du personnel d'exploitation ou d'intervention au-dessus de ce réceptacle.

A cet effet, il est proposé conformément à l'invention un réceptacle d'extinction par isolement d'un combustible liquide enflammé, comprenant des bacs récepteurs élémentaires juxtaposés, des moyens pour solidariser et pour mettre en communication certains au moins des bacs récepteurs adjacents par au moins un passage, chacun des bacs récepteurs étant fermé par un couvercle formé de manière à permettre l'écoulement du combustible liquide et pourvu pour cela d'au moins un orifice normalement obturé par un premier organe d'obturation et dont l'ouverture est commandée par la chute du combustible liquide sur le couvercle, caractérisé en ce que lesdits passages débouchent dans les bacs récepteurs à un niveau situé juste au-dessous de l'orifice des couvercles, chacun de ces passages étant normalement obturé par un deuxième organe d'obturation dont l'ouverture est commandée par une montée du niveau du combustible liquide dans l'un des bacs récepteurs dans lesquels débouche le passage, jusqu'au niveau de ce passage.

Grâce à ces caractéristiques, les bacs récepteurs adjacents ne sont mis en communication que lorsque le combustible liquide remplit pratiquement ces bacs. L'effet d'extinction est donc aussi rapide que si le bac récepteur était unique. La communication entre les bacs joue seulement le rôle d'un tropplein permettant de déverser l'excédent de combustible liquide dans les bacs voisins qui, une fois remplis, peuvent être désolidarisés aisément.

Selon un mode de réalisation préféré de l'invention, chacun des passages comporte un bord ou siège circulaire à l'une au moins de ses extrémités, le deuxième organe d'obturation étant une sphère de densité inférieure à la densité du combustible liquide à recueillir, cette sphère étant normalement maintenue en contact étanche avec le bord circulaire par un moyen d'application approprié.

De préférence, ce moyen d'application comprend un organe de liaison souple, incliné par rapport à une direction verticale passant par le centre de la sphère et par lequel la sphère est suspendue au couvercle du bac.

Selon un premier mode de réalisation de l'invention, le couvercle de chacun des bacs récepteurs a la forme d'un entonnoir, le premier organe d'obturation étant une sphère de densité inférieure à la densité du combustible liquide à recueillir, cette sphère reposant par gravité dans le fond de l'entonnoir.

La sphère constituant le premier organe d'obturation peut alors être liée au couvercle du bac récepteur par un organe de liaison souple.

Selon un deuxième mode de réalisation de l'invention, le couvercle de chacun des bacs récepteurs constitue le fond d'un bac collecteur élémentaire de même section horizontale que les bacs récepteurs, des moyens étant prévus pour solidariser et pour mettre en communication certains au moins des bacs collecteurs adjacents par au moins un passage. Ce mode de réalisation permet d'éviter le débordement lorsque le débit de fuite est important.

Dans ce cas, les bacs récepteurs et collecteurs ont, de préférence, les mêmes dimensions, ce qui simplifie la fabrication de réceptable et en réduit le coût.

Dans le mode de réalisation préféré de l'invention, les moyens pour solidariser et pour mettre en communication les bacs adjacents sont des oeillets présentant un passage central de section circulaire. Cette caractéristique permet de désassembler aisément les bacs au moyen d'une pince ou d'un outil tranchant servant à cisailler les oeillets.

Le réceptacle peut aussi être équipé d'un plancher ajouré constitué par des grilles de maintien horizontales disposées selon le cas au-dessus du couvercle de chacun des bacs récepteurs ou au-dessus des bacs collecteurs. Le personnel d'exploitation ou d'intervention peut alors circuler librement au-dessus du réceptacle.

Deux modes de réalisation de l'invention vont maintenant être décrits à titre d'exemples nullement limitatifs, en se référant aux dessins annexés dans lesquels :

 – la figure 1 est une vue de côté, en coupe verticale, d'un réceptacle d'isolement selon une premier mode de réalisation de l'invention,
 – la figure 2 est une vue de dessus, en coupe partielle, du réceptacle de la figure 1,
 – la figure 3 est une vue de côté et en coupe verticale représentant à plus grande échelle l'un des bacs du réceptacle des figures 1 et 2,
 – la figure 4 est une vue en perspective et en coupe verticale représentant à plus grande échelle l'un des oeillets permettant de réunir et de faire communiquer entre eux deux bacs adjacents du réceptacle des figures 1 et 2,
 – la figure 5 est une vue en perspective représentant l'organe de liaison souple par lequel la sphère obturant normalement chacun des passages formés entre les bacs adjacents est suspendue au couvercle de l'un de ces bacs,
 – la figure 6 est une vue en perspective et en coupe verticale analogue à la figure 4 représentant un bouchon permettant d'obturer les orifices formés sur les parois extérieures des bacs situés à la périphérie du réceptacle des figures 1 et 2,
 – la figure 7 est une vue en perspective éclatée montrant les pièces de recouvrement qui sont placées sur les bords supérieurs des bacs adjacents du réceptacle, et
 – la figure 8 est une vue en perspective éclatée illustrant un deuxième mode de réalisation de l'invention.

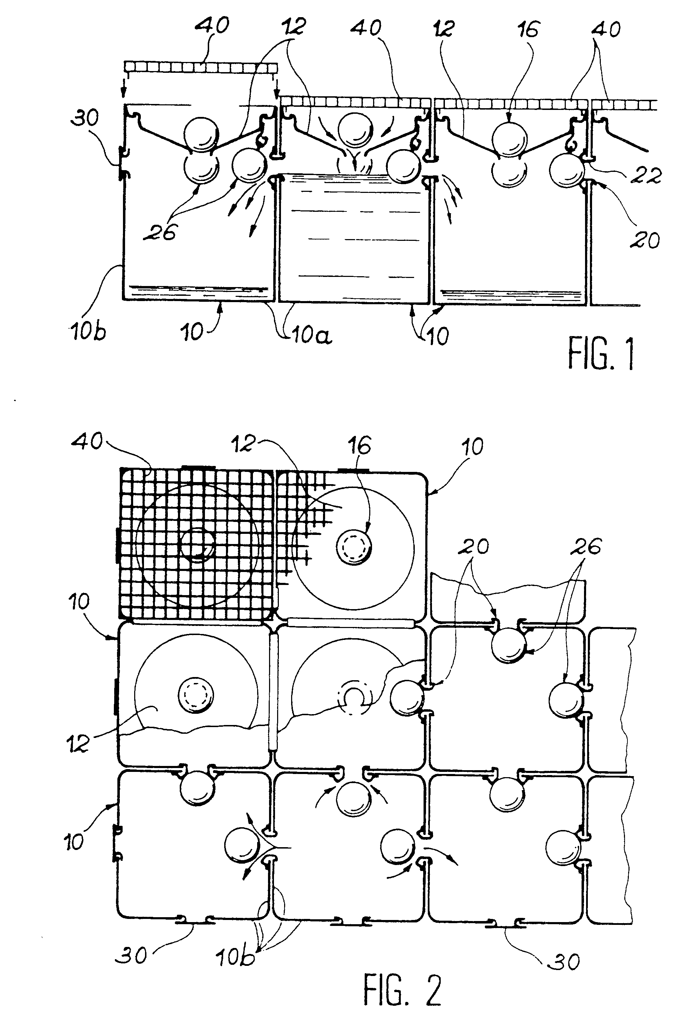

Les figures 1 et 2 représentent un réceptacle conforme à l'invention, permettant d'éteindre un combustible liquide enflammé en l'isolant rapidement de l'air ambiant.

Selon la quantité de combustible liquide que l'on désire pouvoir recevoir dans le réceptacle, celui-ci comprend un nombre plus ou moins grand de bacs récepteurs élémentaires 10 juxtaposés. Chacun des bacs élémentaires 10 est réalisé en tôle mince et comprend un fond plan et horizontal 10a et quatre parois planes et verticales 10b disposées de telle sorte que chacune des boîtes 10 a en section horizontale la forme d'un carré dont les angles sont arrondis. Bien entendu, une forme différente pourrait être adoptée, la section horizontale de chacune des boîtes pouvant notamment être rectangulaire ou hexagonale.

Les bacs élémentaires 10 sont accolés par leurs parois 10b, de façon à former un réceptacle dont la surface totale est égale à un multiple de la section de chacun des bacs.

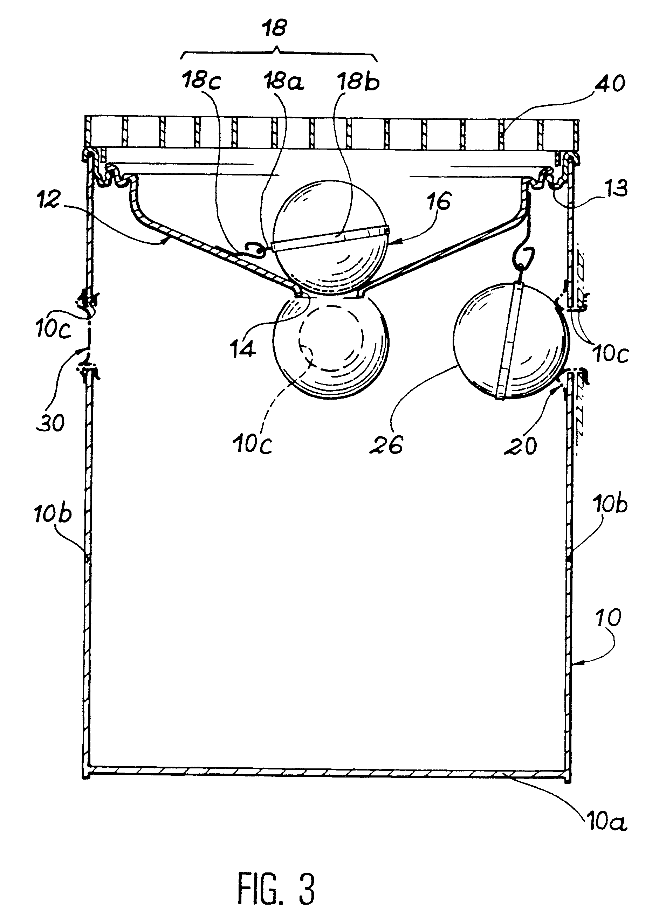

Comme le montrent notamment les figures 1 et 3, chacun des bacs 10 est fermé à son extrémité supérieure par un couvercle 12. Les couvercles 12 sont également réalisés en tôle mince, cette tôle reposant sur une gouttière 13, également en tôle, sertie sur le bord supérieur des cloisons verticales 10b du bac correspondant (figure 3).

Chacun des couvercles 12 a la forme d'un entonnoir permettant de canaliser le combustible liquide pouvant se déverser sur ce couvercle vers un orifice central 14. Cet orifice 14 présente une forme circulaire et définit ainsi un siège sur lequel repose normalement par gravité une sphère d'obturation 16. Dans ces conditions, l'orifice 14 est obturé de façon étanche par la sphère 16.

Les sphères d'obturation 16 sont réalisées de telle sorte que leur densité soit inférieure à celle du combustible liquide à recueillir. Il peut s'agir notamment de sphères métalliques creuses remplies d'air.

Dans l'exemple de réalisation représenté sur la figure 3, la sphère 16 est liée au couvercle 12 par un organe de liaison souple 18. Cet organe de liaison 18 a pour fonction d'empêcher que la sphère 16 ne s'échappe de l'entonnoir formé par le couvercle 12, sans pour autant empêcher un déplacement de la sphère en éloignement du siège formé autour de l'orifice 14, lorsque du combustible liquide tombe sur le couvercle 12.

Dans l'exemple de réalisation représenté sur la figure 3, l'organe de liaison souple 18 comprend une patte d'accrochage 18a formée sur un anneau 18b fixé par exemple par sertissage autour de la sphère 16. La patte 18a présente une lumière dans laquelle est introduit, puis replié un crochet formé à l'extrémité d'une languette 18c fixée par exemple par soudure sur le couvercle 12. La liaison ainsi réalisée permet un pivotement de la sphère 16 et de sa patte d'accrochage 18a, autour du crochet formé à l'extrémité de la languette 18c.

Par ailleurs, chacune des parois verticales 10b des bacs 10 est percée d'un trou circulaire 10c. Les trous 10c sont tous placés au même niveau par rapport au fond 10a des bacs, de façon à être situés immédiatement en-dessous de l'orifice 14 du couvercle correspondant, comme l'illustre la figure 3. Par ailleurs, les trous 10c sont situés à égale distance des angles du bac. De cette manière et comme l'illustre en particulier la figure 1, lorsque les bacs sont juxtaposés avec leurs parois latérales 10b adjacentes, les trous 10c formés sur deux parois 10b adjacentes sont alignés.

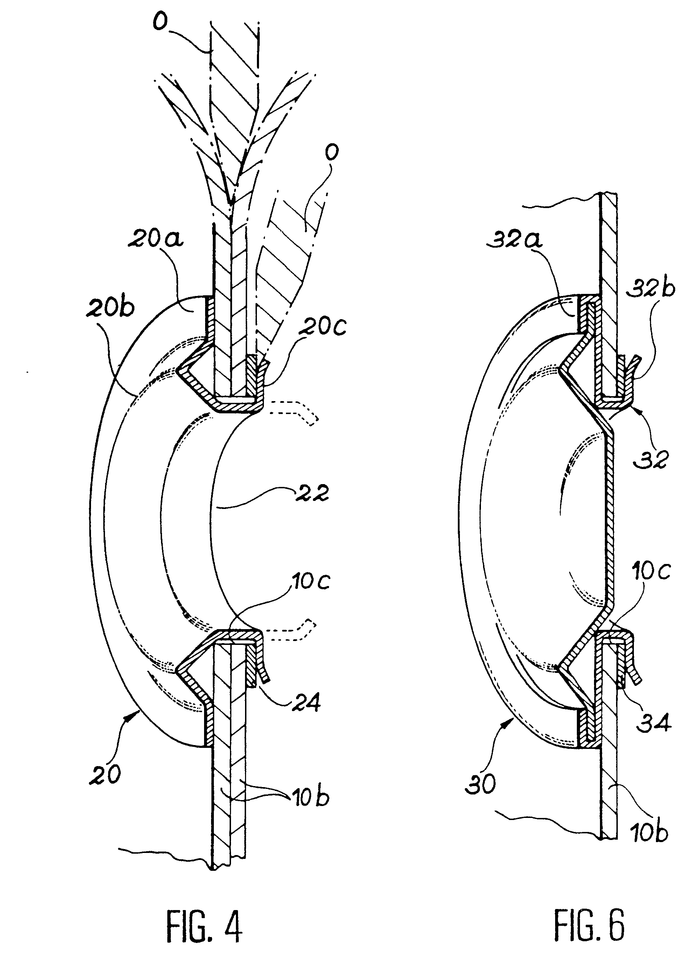

Afin de solidariser et de mettre en communication les bacs adjacents 10, on place dans les trous alignés 10c des oeillets d'assemblage 20 traversant les parois 10b adjacentes. Comme l'illustre plus précisément la figure 4, chacun des oeillets d'assemblage 20 est réalisé en tôle mince et présente un passage central 22, de section circulaire, par lequel les bacs adjacents peuvent communiquer. A l'une de ses extrémités, l'oeillet 20 comprend une collerette 20a pourvue d'une partie circulaire en saillie 20b formant un siège de valve. L'extrémité opposée de l'oeillet 20 est rabattue par sertissage pour former une collerette 20c, après qu'une rondelle 24 ait été placée entre cette collerette 20c et la paroi 10b du bac correspondant. Comme l'illustre notamment la figure 2, les oeillets 20 sont montés de préférence de telle sorte que chacun des bacs 10 comprenne au plus deux sièges 20b, situés par exemple sur deux parois 10b adjacentes de ce bac.

Conformément à une caractéristique essentielle de l'invention et comme l'illustre notamment la figure 3, une sphère d'obturation 26 est normalement en appui étanche contre le siège 20b formé sur chacun des oeillets 20. La sphère 26 présente une densité inférieure à la densité du combustible liquide à recueillir et elle est appliquée contre le siège 20b par un organe de liaison souple 28.

En pratique, les sphères 26 peuvent être des sphères creuses réalisées en tôle mince et contenant de l'air.

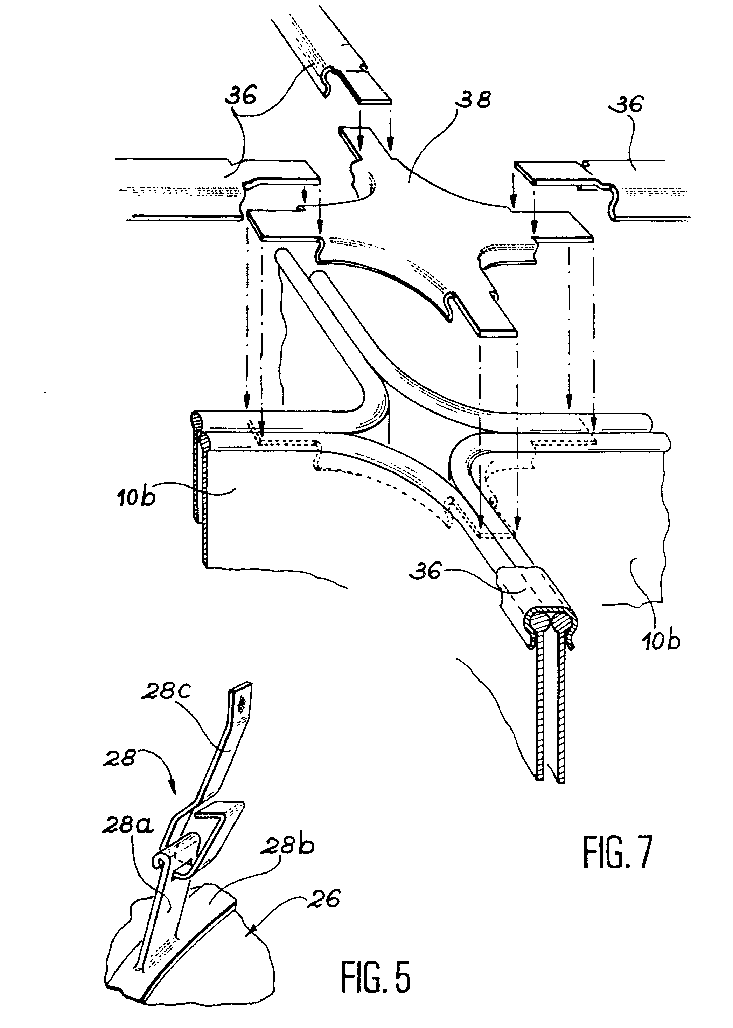

Dans le mode de réalisation représenté, les sphères 26 sont suspendues au couvercle 12 du bac correspondant par un organe de liaison 28 représenté plus en détail sur la figure 5. Cet organe 28 comprend une patte d'accrochage 28a soudée sur un anneau 28b entourant un plus grand diamètre de la sphère 26 et fixée à cette dernière par exemple par sertissage. L'organe de liaison 28 comprend de plus une lame souple 28c soudée par son extrémité supérieure à la périphérie du couvercle 12 et dont l'extrémité inférieure forme un crochet traversant une lumière formée dans la patte 28a, ce crochet étant replié sur cette dernière.

Comme le montre la figure 3, le point de fixation de la lame 28c sur le couvercle 12 est décalé vers la paroi 10b portant l'oeillet 20 sur lequel est en appui la sphère 26 accrochée à cette lame, par rapport à une verticale passant par le centre de la sphère, lorsque cette dernière est en appui sur le siège 20b formé sur l'oeillet 20.

Dans le cas décrit précédemment, où deux sièges 20b au plus sont placés dans chacun des bacs 10, deux sphères 26 au plus sont suspendues à chacun des couvercles 12.

Dans l'exemple de réalisation représenté sur les figures, les sphères 16 et 26 sont totalement identiques. En particulier, elles ont le même diamètre et sont toutes deux équipées d'un anneau 18b, 28b pourvu d'une patte d'accrochage 18a, 28a.

De plus, les sphères 16 et 26 sont toutes fixées aux couvercles 12, de sorte que la structure des bacs 10 est particulièrement simple.

Dans l'exemple de réalisation représenté, et afin d'accroître la simplicité et le caractère modulaire des bacs élémentaires constituant le réceptacle selon l'invention, les bacs 10 sont tous identiques, ce qui implique que les parois 10b formant la périphérie extérieure du réceptacle sont également percées d'un trou 10c.

Comme l'illustre en particulier la figure 6, ces trous sont alors obturés par des bouchons 30. Chacun des bouchons 30 peut notamment être constitué par un disque en tôle mince dont le bord périphérique est serti dans une collerette 32a formée à l'extrémité d'un oeillet 32 traversant le trou 10c de la paroi 10b à obturer. L'extrémité opposée de l'oeillet 32 est ensuite rabattue par sertissage pour former une collerette 32b, après qu'une rondelle 34 ait été interposée entre la collerette 32b et la paroi 10b.

Comme l'illustre la figure 7, lorsque les différents bacs constituant le réceptacle ont été assemblés et reliés par les oeillets 20, on place sur les bords supérieurs des parois verticales adjacentes 10b des différents bacs des barrettes de recouvrement 36 chevauchant simultanément les bords des deux parois.

Dans l'exemple représenté, dans lequel les angles des bacs 10 sont arrondis, des pièces de recouvrement d'angles 38 chevauchant simultanément les bords supérieurs des angles arrondis de quatre bacs adjacents sont également mis en place.

Ces différentes pièces de recouvrement 36 et 38 permettent d'assurer l'écoulement du combustible liquide recueilli par le réceptacle vers les orifices 14 par les couvercles 12 en forme d'entonnoir. Tout écoulement de combustible liquide entre les bacs est ainsi évité.

Enfin, dans le mode de réalisation représenté sur les figures 1 à 3, une grille de maintien horizontale 40 est placée sur chacun des bacs 10, au-dessus du couvercle 12. La mise en place de cette grille est rendue possible par la réalisation des couvercles 12 en forme d'entonnoir et par l'utilisation de sphères 16 dont le diamètre est inférieur au décalage vertical existant entre l'orifice 14 et le bord supérieur des parois 10b des bacs.

L'ensemble des grilles de maintien 40 posées au-dessus du couvercle 12 de chacun des bacs 10 forme ainsi un plancher ajouré permettant la libre circulation du personnel d'exploitation ou d'intervention sur le réceptacle. Ces grilles jouent également le rôle de brise-jet du liquide qui se déverse sur les couvercles, évitant ainsi la détérioration de ces derniers sous l'action d'un impact direct et localisé.

Le fonctionnement du réceptacle qui vient d'être décrit à titre d'exemple en se référant aux figures 1 à 7 est le suivant.

En l'absence d'une arrivée de combustible liquide sur le réceptacle, les orifices 14 formés dans les couvercles 12 des bacs sont tous obturés par les sphères 16. De même, les passages 22 formés dans les oeillets 20 reliant les bacs adjacents sont tous obturés par les sphères 26.

Lorsqu'un combustible liquide enflammé est recueilli par certains des bacs 10 du réceptacle selon l'invention, par exemple en raison d'une fuite dans une tuyauterie véhiculant du sodium liquide à haute température, dans un réacteur nucléaire à neutrons rapides, ce combustible liquide enflammé traverse la grille 40 pour chuter sur le couvercle 12 du ou des bacs concernés. En raison de la forme en entonnoir du couvercle 12, le combustible liquide est acheminé vers le centre du couvercle. Dès que le niveau de ce combustible est suffisant pour soulever la sphère 16 du siège formé par l'orifice 14, compte tenu de la différence de densité entre la sphère et le combustible liquide, ce dernier est admis à l'intérieur du bac 10 correspondant. Toutefois, le ou les bacs concernés restent alors isolés des bacs voisins, puisque les sphères 26 obturent toujours les passages 22. Par conséquent, l'atmosphère régnant à l'intérieur de chacun de ces bacs est à la fois isolée de l'atmosphère extérieure et de l'atmosphère contenue dans les autres bacs du réceptacle. En conséquence, l'extinction du feu s'effectue très rapidement par isolement.

L'ouverture des passages 22 formés dans les oeillets 20 ne se produit que lorsque le niveau du combustible liquide dans un bac 10 déterminé s'élève suffisamment pour que les sphères 26 disposées dans ce bas et obturant les passages 22 débouchant dans ce bac se mettent à flotter. Quant aux sphères 26 disposées dans les bacs 10 adjacents elles sont déplacées et ouvrent les passages 22 sous l'action de la pression latérale exercée par le combustible liquide du bac central 10. En raison de l'inclinaison par rapport à la verticale de l'organe de liaison 28 par lequel chacune des sphères 26 est suspendue au couvercle 12, la flottaison de la sphère a pour effet d'éloigner celle-ci de son siège 20b et, par conséquent, d'ouvrir le passage 22 correspondant.

De cette manière, les passages 22 formés dans les oeillets, qui sont situés dans les parties supérieures des parois 10b, à proximité du couvercle 12, remplissent une fonction de trop-plein, sans pour autant réduire l'efficacité de l'effet d'extinction du réceptacle.

En plus de son caractère modulaire indiqué précédemment, qui contribue à la grande simplicité et au faible coût du réceptacle selon l'invention, il est à noter que la seule fonction de trop-plein remplie par les passages 22, ainsi que la réalisation simultanée de ces passages et des liaisons des bacs entre eux au moyen d'oeillets d'assemblage, permettent de séparer les différents bacs relativement facilement.

Deux exemples de réalisation d'une telle séparation sont représentés en traits mixtes sur la figure 4. Ainsi, on voit sur cette figure que la séparation des bacs peut être effectuée au moyen d'un outil écarteur 0 introduit entre les parois adjacentes 10b des bacs et au moyen duquel les oeillets 20 sont découpés.

Sur la figure 4, on voit également que la séparation des bacs peut aussi être obtenu en découpant la collerette 20c des oeillets au moyen du même outil 0.

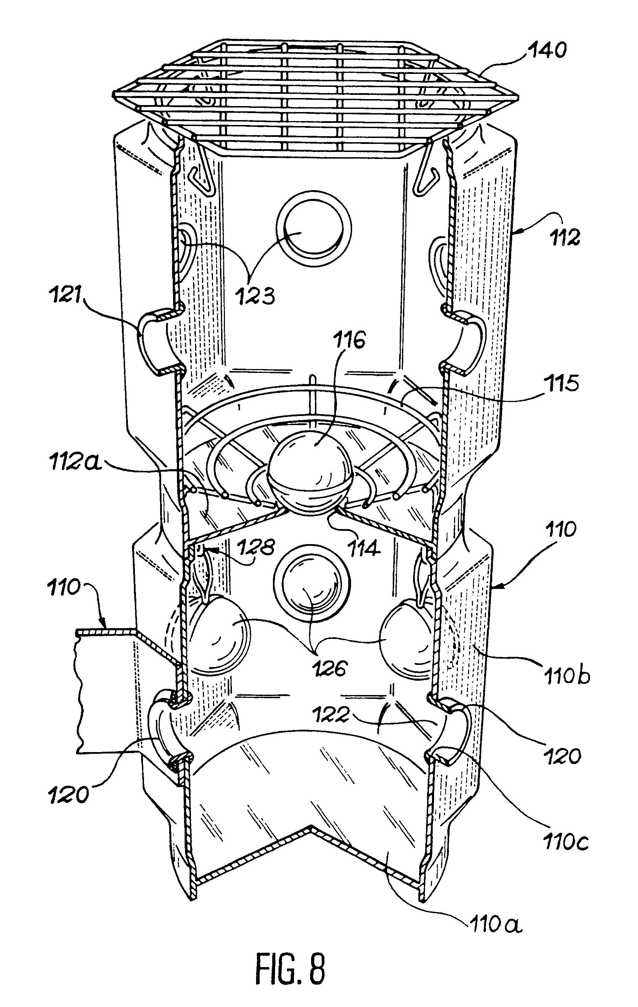

La figure 8 illustre en perspective éclatée un autre mode de réalisation de l'invention, dans lequel le réceptable d'extinction comprend, en plus des bacs récepteurs adjacents, des bacs collecteurs placés au-dessus de chacun des bacs récepteurs.

De façon plus précise, on a représenté sur la figure 8 un bac récepteur 110 dont la forme est légèrement différente de celle du bac 10 précédemment décrit, mais qui présente des caractéristiques générales comparables à ce dernier. Le bac récepteur 110 présente sur la majeure partie de sa hauteur une section horizontale hexagonale, prolongée vers le haut et vers le bas par deux parties cylindriques. Le fond 110a du bac 110 est plan, alors que son extrémité supérieure est ouverte.

Comme dans le premier mode de réalisation, chacune des faces de la paroi hexagonale 110b du bac récepteur 110 est percée dans sa partie supérieure d'un trou circulaire 110c. Des oeillets 120 traversant les trous 110c des faces en contact des bacs récepteurs adjacents permettent de solidariser ces bacs et de les mettre en communication par des passages 122. Ces passages 122 sont normalement obturés par des sphères 126 suspendues à la partie supérieure cylindrique de la paroi du bac par des organes de liaison 128.

Ce mode de réalisation de la figure 8 se distingue principalement du mode de réalisation des figures 1 à 7 par le fait que le couvercle de chacun des bacs récepteurs 110 constitue le fond 112a d'un bac collecteur 112 placé au-dessus du bac récepteur. Les bacs collecteurs 112 sont identiques aux bacs récepteurs 110, la seule différence entre ces bacs superposés concernant le fond 112a en forme de disque plan des bacs collecteurs 112, qui sont percés en leur centre d'un orifice 114, alors que le fond 110a en forme de disque plan des bacs récepteurs 110 est étanche.

Les bacs collecteurs 112 adjacents sont solidarisés par des oeillets 121 identiques aux oeillets 120, qui traversent des trous circulaires formés dans les faces en contact de ces bacs. Ces oeillets 121 délimitent des passages 123 par lesquels les bacs collecteurs 112 communiquent entre eux.

Comme dans le premier mode de réalisation décrit, une sphère 116 de densité inférieure à la densité du liquide à éteindre obture normalement l'orifice 114. Etant donné que le fond 112a des bacs 112 est plan, le maintien des sphères 116 devant les orifices 114 est assuré par des grilles tronconiques 115 reposant sur le fond 112a de chacun des bacs collecteurs.

Dans le mode de réalisation de la figure 8, au lieu d'être placées au-dessus du couvercle des bacs récepteurs, les grilles de maintien horizontales 140 constituent le plancher ajouré sur lequel peut marcher le personnel d'exploitation ou d'intervention, sont placées au-dessus de chacun des bacs collecteurs 112.

Comme précédemment, des pièces formant déflecteurs (non représentées) recouvrent les parties du réceptable situées entre les parties supérieures cylindriques des bacs collecteurs 112, afin d'éviter l'écoulement du liquide entre les bacs.

Par rapport au premier mode de réalisation décrit, le mode de réalisation de la figure 8 a pour avantage essentiel de pouvoir recueillir un débit de fuite considérablement plus grand. En effet, les bacs collecteurs communiquant entre eux évitent le débordement du liquide lorsque le débit de fuite est plus élevé que le débit au travers des orifices 114.

En outre, le caractère modulaire des bacs collecteurs et récepteurs confère au réceptable une grande simplicité et un faible coût.

Bien entendu, l'invention n'est pas limitée aux modes de réalisation qui viennent d'être décrit à titre d'exemples, mais en couvre toutes les variantes dans le cadre des revendications.

On comprend notamment que les sphères flottantes pourraient être remplacées par tout autre dispositif assurant les obturations souhaitées et dont l'ouverture est commandée par l'élévation du niveau du combustible liquide.

De façon comparable, la mise en communication et la fixation des bacs voisins peuvent être réalisées par des organes différents des oeillets décrits, tels que des raccords soudés ou par soudure.

Les organes assurant la suspension des sphères 26 et 126 peuvent aussi être remplacés par tout moyen remplissant une fonction analogue. Par exemple, les sphères peuvent être placées dans des gouttières inclinées vers la paroi dans laquelle est formé le passage à obturer. Les sphères sont alors appliquées par gravité contre les sièges, tant que le niveau du liquide dans le bac ne les soulève pas.

Enfin, plusieurs passages peuvent également être formés entre deux bacs adjacents, chacun de ces passages étant alors normalement fermé par un organe d'obturation. A l'inverse, certains bacs adjacents peuvent ne pas communiquer directement entre eux, mais par l'intermédiaire d'un troisième bac adjacent aux deux premiers.

## Revendications

1. Réceptacle d'extinction par isolement d'un combustible liquide enflammé, comprenant des bacs récepteurs élémentaires (10) juxtaposés, des moyens (20) pour solidariser et pour mettre en communication certains au moins des bacs récepteurs adjacents par au moins un passage (22), chacun des bacs récepteurs étant fermé par un couvercle (12) formé de manière à permettre l'écoulement du combustible liquide et pourvu pour cela au moins d'un orifice (14) normalement obturé par un premier organe d'obturation (16) et dont l'ouverture est commandée par la chute du combustible liquide sur le couvercle, caractérisé en ce que lesdits passages (22) débouchent dans les bacs récepteurs (10) à un niveau situé juste au-dessous de l'orifice (14) des couvercles (12), chacun de ces passages (22) étant normalement obturé par un deuxième organe d'obturation (26) dont l'ouverture est commandée par une montée du niveau du combustible liquide dans l'un des bacs récepteurs (10) dans lesquels débouche le passage (22), jusqu'au niveau de ce passage.

2. Réceptacle selon la revendication 1, caractérisé en ce que chacun des passages (22) comporte un bord au siège circulaire (20b) à l'une au moins de ses extrémités, le deuxième organe d'obturation étant une sphère (26) de densité inférieure à la densité du combustible liquide à recueillir, cette sphère (26) étant normalement maintenue en contact étanche avec le bord circulaire (20b) par un moyen d'application approprié (28).

3. Réceptacle selon la revendication 2, caractérisé en ce que le moyen d'application comprend un organe de liaison souple (28) incliné par rapport à une direction verticale passant par le centre de la sphère (26) et par lequel la sphère (26) est suspendue et normalement maintenue contre le bord circulaire (20b) du passage (22).

4. Réceptacle selon l'une quelconque des revendications 1 à 3, caractérisé en ce que le couvercle (12) de chacun des bacs récepteurs (10) a la forme d'un entonnoir, le premier organe d'obturation étant une sphère (16) de densité inférieure à la densité du combustible liquide à recueillir, cette sphère (16) reposant par gravité dans le fond de l'entonnoir (12).

5. Réceptacle selon la revendication 4, caractérisé en ce que la sphère (16) constituant le premier organe d'obturation est liée au couvercle du bac récepteur (10) par un organe de liaison souple (18).

6. Récepteur selon l'une quelconque des revendications 1 à 3, caractérisé en ce que le couvercle de chacun des bacs récepteurs (110) constitue le fond (112a) d'un bac collecteur élémentaire (112) de même section horizontale que les bacs récepteurs, des moyens (121) étant prévus pour solidariser et pour mettre en communication certains au moins des bacs collecteurs adjacents par au moins un passage (123).

7. Récepteur selon la revendication 6, caractérisé en ce que les bacs récepteurs (110) et collecteurs (112) ont les mêmes dimensions.

8. Récepteur selon l'une quelconque des revendications 6 et 7, caractérisé en ce que le fond (112a) de chaque bac collecteur élémentaire (112) a approximativement la forme d'un disque plan percé dudit orifice (114) en son centre, et supporte une pièce tronconique (115) de centrage du premier organe d'obturation, ce dernier étant constitué par une sphère (116) de densité inférieure à la densité du combustible liquide à recueillir.

9. Réceptacle selon l'une quelconque des revendications précédentes, caractérisé en ce que les moyens pour solidariser et pour mettre en communication les bacs (10, 110) adjacents sont des oeillets (20, 120) présentant un passage central (22, 122) de section circulaire.

10. Réceptacle selon l'une quelconque des revendications 1 à 9, caractérisé en ce qu'il comprend de plus un plancher ajouré constitué par des grilles de maintien horizontales (40, 140) disposées au-dessus du couvercle (12) ou du collecteur (112) de chacun des bacs (10, 110).

## Ansprüche

1. Behälter zum Löschen eines brennenden, flüssigen Brennstoffs durch Isolierung mit nebeneinander angeordneten Elementaraufnahmetrögen (10), Vorrichtungen (20) zum Befestigen und zum Inverbindungbringen wenigstens bestimmter Aufnahmetröge durch wenigstens einen Durchgang (22), wobei jeder der Aufnahmetröge von einem Deckel (12) verschlossen ist, der derart geformt ist, daß er das Ausgießen des flüssigen Brennstoffs ermöglicht, und der dafür mit wenigstens einer Öffnung (14) versehen ist, die normalerweise von einem Verschlußelement (16) verschlossen ist, das von dem Aufprall des flüssigen Brennstoff auf den Deckel gesteuert wird, dadurch gekennzeichnet, daß die Durchgänge (22) auf der Höhe gerade unterhalb der Öffnung (14) der Deckel (12) in die Aufnahmetröge (10) münden, wobei jeder dieser Durchgänge (22) normalerweise von einem zweiten Verschlußelement (26) verschlossen ist, dessen Öffnung von einem Anstieg des Pegels des flüssigen Brennstoffs in einem der Aufnahmetröge (10), in die der Durchgang (22) mündet, bis auf die Höhe dieses Durchgangs gesteuert wird.

2. Behälter nach Anspruch 1, dadurch gekennzeichnet, daß jeder der Durchgänge (22) einen Rand mit kreisförmigem Sitz (20b) an wenigstens einem seiner Enden aufweist, wobei das zweite Verschlußelement eine Kugel (26) mit geringer Dichte als die des zurückzuhaltenden, flüssigen Brennstoffs ist, wobei diese Kugel (26) normalerweise mittels einer geeigneten Andruckvorrichtung (28) in dichtem Kontakt mit dem kreisförmigen Rand (20b) gehalten wird.

3. Behälter nach Anspruch 2, dadurch gekennzeichnet, daß die Andruckvorrichtung ein elastisches Element (28) umfaßt, das gegen eine vertikale Richtung, die durch den Mittelpunkt der Kugel (26) geht, geneigt ist und durch das die Kugel (26) aufgehängt ist und normalerweise gegen den kreisförmigen Rand (20b) des Durchgangs (22) gehalten wird.

4. Behälter nach einem der Ansprüche 1 bis 3, dadurch gekennzeichnet, daß der Deckel jeder der Aufnahmetröge (10) eine Trichterform besitzt, wobei das erste Verschlußelement eine Kugel (16) einer geringeren Dichte als die des flüssigen, aufzunehmenden Brennstoffs ist, wobei diese Kugel (16) durch die Schwerkraft auf dem Boden des Trichters (12) ruht.

5. Behälter nach Anspruch 4, dadurch gekennzeichnet, daß die Kugel (16), die das erste Verschlußelement bildet über ein elastisches Verbindungselement (18) mit dem Deckel des Aufnahmetrogs (10) verbunden ist.

6. Behälter nach einem der Ansprüche 1 bis 3, dadurch gekennzeichnet, daß der Deckel jedes der Aufnahmetröge (110) den Boden (112a) eines elementaren Sammelaufnahmetrogs (112) mit demselben horizontalen Querschnitt wie die Aufnahmetröge bildet, wobei eine Vorrichtung (121) zum Befestigen und zum Inverbindungbringen durch wenigstens einen Durchgang (123) wenigstens angrenzender Sammelaufnahmetröge vorgesehen sind

7. Behälter nach Anspruch 6, dadurch gekennzeichnet, daß die Aufnahmetröge (110) und Sammeltröge (112) dieselben Dimensionen besitzen.

8. Behälter nach einem der Ansprüche 6 und 7, dadurch gekennzeichnet, daß der Boden (112a) jedes elementaren Sammeltrogs (112) ungefähr die Form einer in ihrer Mitte von der Öffnung (114) durchbohrten Scheibe besitzt und ein kegelstumpfförmiges Zentrierteil (115) für das erste Verschlußelement trägt, wobei letzteres aus einer Kugel geringerer Dichte als die des flüssigen, aufzunehmenden Brennstoffs besteht.

9. Behälter nach einem der vorhergehenden Ansprüche, dadurch gekennzeichnet, daß die Vorrichtung zum Befestigen und zum Inverbindungbringen der aneinander grenzenden Tröge (10, 110) Augen (20, 120) sind, die einen zentralen Durchgang (22, 122) mit einem kreisförmigen Querschnitt aufweisen.

10. Behälter nach einem der Ansprüche 1 bis 9, dadurch gekennzeichnet, daß er außerdem eine durchbrochene Planke umfaßt, die aus horizontalen Stützgittern (40, 140) besteht, die oberhalb des Deckels (12) oder des Aufnehmers (112) jedes der Tröge (10, 110) angeordnet sind.

## Claims

1. Receptacle for extinguishing a burning liquid fuel by isolation, incorporating elementary juxtaposed reception tanks (10), means (20) for joining and linking at least some of the adjacent reception tanks by at least one passage (22), each of the reception tanks being sealed by a cover (12) shaped in such a way as to permit the outflow of the liquid fuel and having for this purpose at least one orifice (14) normally sealed by a first sealing member (16) and whose opening is controlled by the dropping of liquid fuel onto the cover, characterized in that said passages (22) issue into the reception tanks (10) at a level just below the orifice (14) of the covers (12), each of the passages (22) being normally sealed by a second sealing member (26), whereof the opening is controlled by a rise in the level of the liquid fuel in one of the reception tanks (10) into which the passage (22) issues, up to the level of said passage.

2. Receptacle according to claim 1, characterized in that each of the passages (22) is terminated by a circular rim or seat (20b) at at least one of its ends, the second sealing member being a sphere (26) with a density lower than the density of the liquid fuel to be collected, said sphere (26) being normally maintained in tight contact with the circular rim (20b) by an appropriate application means (28).

3. Receptacle according to claim 2, characterized in that the application means comprises a flexible connecting member (28) inclined with respect to a vertical direction passing through the centre of sphere (26) and by which sphere (26) is suspended and normally maintained against the circular rim (20b) of passage (22).

4. Receptacle according to any one of the claims 1 to 3, characterized in that the cover (12) of each of the reception tanks (10) is funnel-shaped, the first sealing member being a sphere (16) with a density lower than the density of the liquid fuel to be collected, said sphere (16) resting by gravity in the bottom of funnel (12).

5. Receptacle according to claim 4, characterized in that the sphere (16) constituting the first sealing member is linked with the cover of reception tank (10) by a flexible connecting member (18).

6. Receptacle according to any one of the claims 1 to 3, characterized in that the cover of each of the reception tanks (110) constitutes the bottom (112a) of an elementary collecting tank (112) of the same cross-section as the reception tanks, means (121) being provided for joining and linking at least some of the adjacent collecting tanks by at least one passage (123).

7. Receptacle according to claim 6, characterized in that the reception (110) and collecting (112) tanks have the same dimensions.

8. Receptacle according to either of the claims 6 and 7, characterized in that the bottom (112a) of each elementary collecting tank (112) is approximately shaped like a flat disk centrally provided with an orifice (114) and supports a frustum-shaped part (115) for centring the first sealing member, the latter being constituted by a sphere (116) having a density below the density of the liquid fuel to be collected.

9. Receptacle according to any one of the previous claims, characterized in that the means for joining and linking adjacent tanks (10, 110) are eyelets (20, 120) having a central passage (22, 122) with a circular section.

10. Receptacle according to any one of the preceding claims, characterized in that it also comprises a perforated or latticed floor constituted by horizontal maintaining grids (40, 140) placed above the cover (12) or collector (112) of each of the tanks (10, 110).

FIG. 1

FIG. 2

9

FIG. 3

FIG. 4

FIG. 6

36  38  36

10b

36

10b

FIG. 7

28c

28

28a

28b

26

FIG. 5

FIG. 8